# EUROPEAN PATENT SPECIFICATION

(11) **EP 4 063 671 B1**
(45) Date of publication and mention of the grant of the patent: **28.06.2023**
(21) Application number: 21165262.3
(22) Date of filing: 26.03.2021
(51) Int. Cl.: F16B 7/04, B66C 23/28

(54) **A CONNECTING DEVICE FOR SECURING TWO BEAMS TO EACH OTHER, A METHOD FOR USING THE CONNECTING DEVICE, AND TOWER INCLUDING THE CONNECTING DEVICE**
VERBINDUNGSVORRICHTUNG ZUM BEFESTIGEN VON ZWEI TRÄGERN ANEINANDER, VERFAHREN ZUR VERWENDUNG DER VERBINDUNGSVORRICHTUNG UND TURM MIT DER VERBINDUNGSVORRICHTUNG
DISPOSITIF DE CONNEXION POUR FIXER DEUX POUTRES L'UN À L'AUTRE, PROCÉDÉ D'UTILISATION DU DISPOSITIF DE CONNEXION ET TOUR COMPRENANT LE DISPOSITIF DE CONNEXION

(43) Date of publication of application: 28.09.2022
(73) Proprietor: Skyrex AB, 405 19 Göteborg (SE)
(72) Inventor: STRANDBERG, Michael, 722 26 Västerås (SE)
(74) Representative: Swea IP Law AB

(56) References cited:
- EP-A1- 0 530 114
- EP-A1- 2 327 886
- DE-A1-102018 127 557
- US-A1- 2008 229 688
- US-B2- 8 434 963

## Description

### Technical field

The present invention relates to a connecting device for securing two beams to each other, and a method for securing two beams to each other using the connecting device. The present invention also relates to a tower comprising a plurality of tower segments attached to each other by means of a plurality of connecting devices. The tower is, for example, a tower of a tower crane or a wind turbine tower.

### Background

In many applications there is a need to secure two beams to each other in a quick and secure way.

EP3434639A1 discloses a tower crane for elevating components to a wind turbine for performing maintenance on the wind turbine. The tower crane comprises a plurality of tower segments which together form an elongated tower with an adjustable height. The tower is built close to the wind turbine on site. The tower segments are mechanically secured to each other during building of the tower by using attachment means, e.g., bolts, making the lifting assembly more stable. The tower segments are assembled before the maintenance can take place and dissembled when the maintenance is finished. The time needed for assembling and dissembling of the tower segments is a part of the total maintenance time. Thus, it is extremely important that the connection between the tower segments can be made fast. Further, it is important that the connection between the two tower segments can stand high load and is resistant to torque since the tower is exposed to forces due to the wind.

EP0530114 discloses a device for securing two hollow-section members end to end, by means of an internal splice piece of corresponding cross-section. The splice piece is fixed to each member by two connection pins which are orthogonal to each other and pass-through bores in the splice piece and other bores made in the members. Each connection pin is provided with means for immobilising it in translation and in rotation. This device applies in particular to the assembly of tower elements of a tower crane.

A problem with using connection pins to be fitted in bores in the beams is that the pins must be tightly fitted in the bores to avoid play between the beams. This is particularly important if the connecting device is used to attach many tower segments on top of each other to build a high tower, since a play between the tower segments will cause instability of the tower which can lead to wobbling of the tower. To avoid a play, the bore must have a diameter close to the diameter of the pin. This makes it difficult to enter the pins through the bores. Today, the pins are pushed into the bores using sledges or hammers. This is time-consuming and can be dangerous for the personnel mounting the towers since they often need to work at high altitudes when mounting the tower segments.

EP 2 327 886 A1 discloses a joint having a plate designed in the form of a flat disk and projecting from an inner area of a hollow profile into an inner area of another hollow profile. An eccentric bolt is arranged at an aperture of the former hollow profile. An insertion part is inserted into the former hollow profile and movable only in a profile direction. The eccentric bolt and the plate run through an aperture in the insertion part. A hole runs through opposite casing surfaces of the latter hollow profiles, and a front side of the bolt is designed as a flat circular cylinder.

### Summary

It is an aim of the present invention to at least partly overcome the above problems, and to provide an improved connection between two beams.

This aim is achieved by a connecting device as defined in claim 1.

The connecting device comprises a pin, a shaft, and at least one splice element provided with a first through hole for receiving the shaft, and a second through hole spaced apart from the first through hole for receiving the pin. The splice element can be fixed to each of the beams by the pin and the shaft which pass through the first and second through holes respectively and corresponding holes in the beams. There is a gap between the pin and the splice element when the pin is inserted in the second through hole. The shaft is rotatable with respect to splice element about a rotational axis when the shaft is inserted in the first through hole. The connecting device comprises an eccentric ring arranged in the first through hole so that the eccentric ring is rotatable with respect to the first through hole. The eccentric ring has an opening for receiving the shaft, and the opening in the eccentric ring is designed so that the eccentric ring is rotated upon rotation of the shaft when the shaft is inserted into the opening, and the centre of the eccentric ring is offset from the rotational axis of the shaft so that the splice element is moved with respect to the pin upon rotation of the shaft and by that closes the gap on one side of the pin.

Due to the gap between the pin and the splice element, when the pin is inserted in the second through hole, it is easy to insert the pin in the second through hole on site. Accordingly, there is no need to use any tool, such as a sledge or a hammer, to insert the pin into the second through hole. The shaft and eccentric ring make it possible to close the gap between the pin and the splice element on one side of the pin, and by that avoid play between beams. The shaft and the eccentric ring are preferably mounted on one of the beams beforehand, for example, at the factory, and thus the beams are connected to each other on site by the pin. The connecting device according to the invention makes it fast and easy to connect two beams to each other on site. Typically, it takes about 30 second to connect two beams to each other by entering the pin through the holes in the beam and the splice element and rotating the shaft until the gap is closed on one side of the pin and the splice element is pressed against the pin.

Preferably, the rotational axis of the shaft coincides with the longitudinal axis of the shaft.

According to an aspect of the invention, the centre of the opening of the eccentric ring is displaced with respect to the centre of the periphery of the eccentric ring. Thus, here will be an offset between the rotational axis of the shaft and the centre of the eccentric ring.

According to an aspect of the invention, the thickness of the eccentric ring varies in a radial direction along the periphery of the eccentric ring. Due to the offset between the rotational axis of the shaft and the centre of the eccentric ring, the thickness of the eccentric ring in a radial direction varies along the periphery of the eccentric ring.

According to an aspect of the invention, the eccentric ring comprises a first portion and a second portion, and the thickness in a radial direction of the first portion is larger than the thickness of the second portion.

According to an aspect of the invention, the offset between the rotational axis of the shaft and the centre of the eccentric ring is at least half the size of the gap between the pin and the splice element. Due to the eccentricity of the ring, the splice element can be moved twice the length of the offset between the rotational axis of the shaft and the centre of the eccentric ring during rotation of the shaft. Thus, the offset should be at least half the size of the gap in order to entirely close the gap.

According to an aspect of the invention, the offset between the rotational axis of the shaft and the centre of the eccentric ring is larger than half the size of the gap between the pin and the splice element. By having an offset larger than half the size of the gap between the pin and the splice element, it is possible to achieve a pretension on the pin. A pretension on the pin ensures that there is no play between the pin and the splice element if there is an uneven pressure or pull on one side of the pin. Suitably, the offset between the rotational axis of the shaft and the centre of the eccentric ring is 10 - 20% larger than half the size of the gap to provide a satisfactory pretension.

According to an aspect of the invention, the gap between the pin and the splice element is between 0.5 and 3 mm, and preferably between 0.5 and 2 mm. This size of the gap makes it easy to enter the pin through the second through hole without the need of a tool, such as a sledge or a hammer.

According to an aspect of the invention, the offset between the rotational axis and the centre of the eccentric ring is between 0.3 and 5 mm.

According to an aspect of the invention, the periphery of the eccentric ring is circular, and the first through hole is circular. This enables the eccentric ring to be rotated with respect to the first through hole when the shaft is rotated.

According to an aspect of the invention, the first and second through holes are arranged spaced apart with their centre axes in parallel and the splice element is moved along an axis perpendicular to the centre axes of the first and second through holes and extending between the first and second through holes.

According to an aspect of the invention, the splice element is plate-shaped. This is advantageous since it makes it possible to make the splice element in high strength steel.

According to an aspect of the invention, the splice element is made of high strength steel. It is advantageous to be able to have high strength steel in the splice element since it needs to be able to stand high load and to be resistant to torque. With high strength steel is meant steels that have yield strength levels of 550 megapascal pressure units (MPa) or higher.

In one aspect, the splice element is elongate.

According to an aspect of the invention, the splice element has an upper part provided with the second through hole and a lower part provided with the first through hole, and the connecting device comprises a support part having a space for receiving and supporting the lower part of the splice element. The support part is arranged for attaching to one of the beams. The support part facilitates the mounting of the splice element on one of the beams.

According to an aspect of the invention, the support part is arranged so that the shaft is allowed to extend through the support part from one end to the opposite end of the support part and to extend through the first through hole when the lower part of the splice element is inserted in the space.

According to an aspect of the invention, the connecting device comprises a second splice element provided with a first through hole for receiving the shaft, and a second through hole spaced apart from the first through hole for receiving the pin, and there is a gap between the pin and the second splice element when the pin is inserted in the second through hole, the shaft is rotatable with respect to the first and second splice elements when the shaft is inserted in the first through holes of the splice elements, the connecting device comprises a second eccentric ring arranged in the first through hole of the second splice element so that the second eccentric ring is rotatable with respect to the first through hole of the second splice element, the second eccentric ring has an opening for receiving the shaft, the opening in the second eccentric ring is designed so that the second eccentric ring is rotated upon rotation of the shaft when the shaft is inserted into the second opening, and the centre of the second eccentric ring is offset from the rotational axis of the shaft so that the second splice element is moved with respect to the pin upon rotation of the shaft. Having more than one splice element provided with eccentric rings makes the connecting device able to stand higher loads and to be more resistant to torque.

The aim is also achieved by a tower crane comprising a plurality of tower segments which together form an elongated tower, wherein the tower segments are attached to each other by means of a plurality of connecting devices according to the invention.

The aim is further achieved by a method for securing a first and a second beams to each other using the connecting device according to the invention.

The method comprises:
- inserting the shaft through the opening of the eccentric ring disposed in the first through hole of the at least one splice element and through one or more holes in the first beam,
- inserting the pin through the second through hole of the at least one splice element and one or more holes in the second beam, and
- rotating the shaft about its longitudinal axis until the splice element is pressed against the pin and the gap between the pin and the splice element is closed on one side of the pin.

The connecting device is, for example, suitable for attaching a plurality of tower segments to each other to form an elongated tower, such as a tower crane or a wind tower. The tower segments are attached to each other by means of a plurality of connecting devices.

The connecting device according to the invention can advantageously be used for connecting two tower segments of a tower crane. However, the connecting device can also be used for connecting other components including beams, such as tower segments of a wind turbine tower.

### Brief description of the drawings

The invention will now be explained more closely by the description of different embodiments of the invention and with reference to the appended figures.
Fig. 1 shows an example of a connecting device according to the invention in an exploded view.
Fig. 2a shows an example of an eccentric ring in a perspective view.
Fig. 2b shows the eccentric ring from above.
Fig. 3a shows the connecting device with the eccentric ring in a first position.
Fig. 3b shows the connecting device with the eccentric ring in a second position.
Fig. 4 illustrates connection of two beams by means of the connecting device.
Fig. 5 illustrates connection of two beams by means of a connecting device including a support part.
Figs. 6 - 9 illustrate the use the connecting device for connecting two beams.
Figs. 10a-b show another example of a connecting device including two splice elements.
Fig. 11 shows two tower segments attached to each other by means of the connecting device.
Fig. 12 shows an example of a tower for a tower crane having plural tower segments attached to each other by means of the connecting device.

### Detailed description

Aspects of the present disclosure will be described more fully hereinafter with reference to the accompanying drawings. The connecting device can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

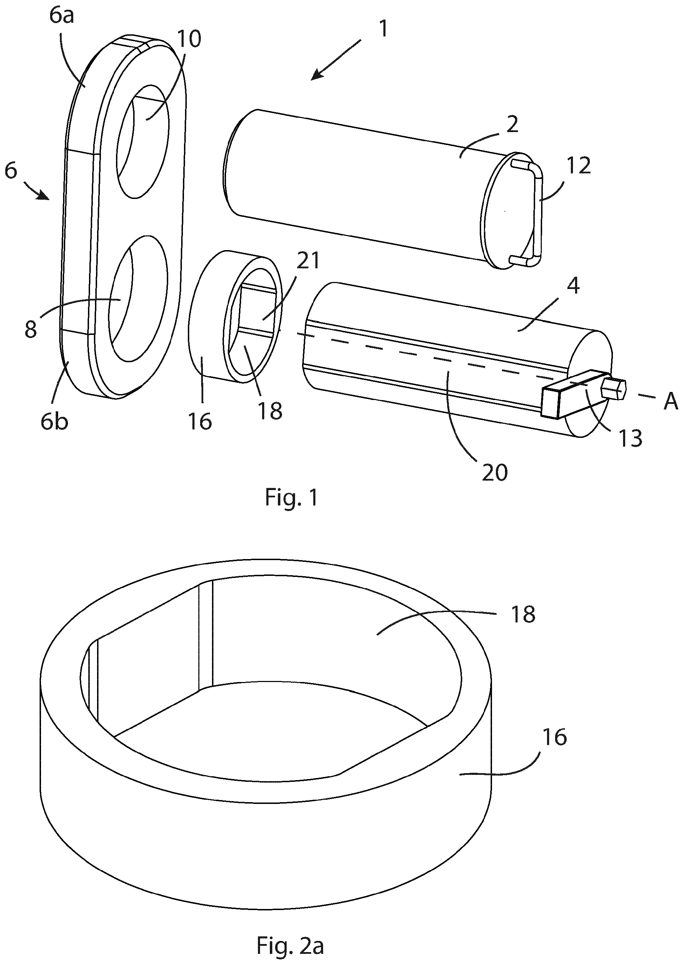

Figure 1 shows an example of a connecting device 1 in an exploded view. The connecting device 1 comprises a pin 2, a shaft 4, and a splice element 6. The splice element 6 is provided with a first through hole 8 for receiving the shaft 4, and a second through hole 10 spaced apart from the first through hole 8 and adapted to receiving the pin 2. The splice element 6 has an upper part 6a provided with the second through hole 10 a lower part 6b provided with the first through hole 8. In the illustrated example, the splice element 6 is elongated and the first and second through holes 8, 10 are arranged spaced apart along the longitudinal axis of the splice element. The splice element 6 can be made of metal, or a metal alloy. Preferably, the splice element 6 is made of steel, and preferably the splice element 6 is made of high strength steel. However, the splice element can be made of other materials, such as ceramic materials. It is advantageous to be able to have high strength steel in the splice element 6 since it needs to be able to stand high load and to be resistant to torque. In the illustrated example, the splice element is plate-shaped. This is advantageous since it makes it possible to make the splice element in high strength steel. However, the splice element can also have other shapes, such as a cuboid.

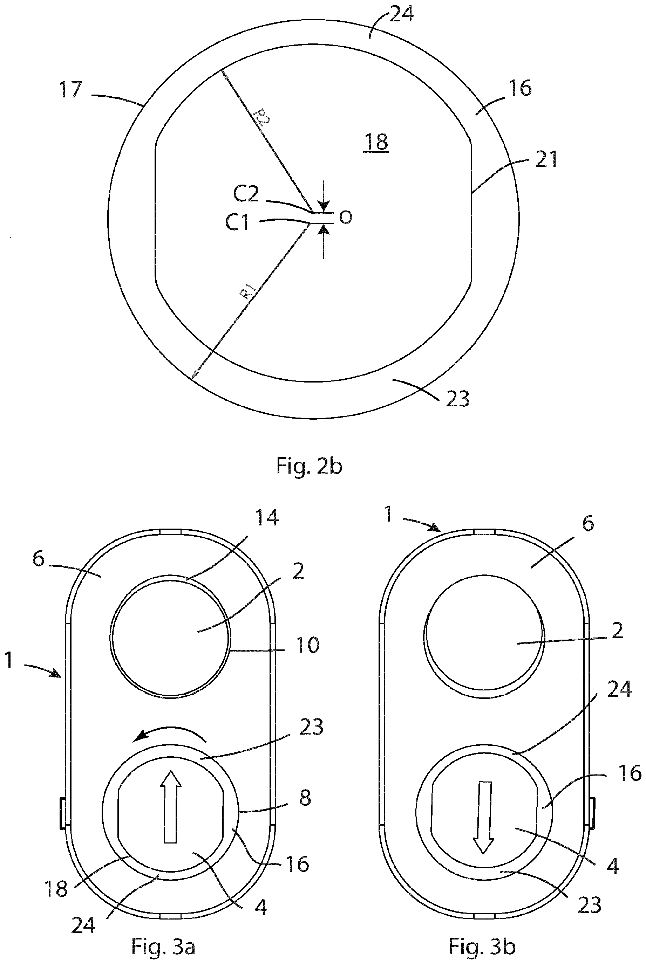

In the illustrated example, the pin 2 is elongated and has a circular cross-section. In the illustrated example, the shape of the second through hole 10 is circular. However, the second through hole 10 can have other shapes, such as square or elliptic. The second through hole 10 and the pin 2 are designed so that there is a gap 14 between the pin 2 and the splice element 6 when the pin 2 is inserted in the second through hole 10, as shown in figure 3a. For example, this is achieved if the diameter of the second through hole 10 is larger than the diameter of the pin 2. Thus, the size of the gap 14 in a radial direction is equal to the difference between the radius of the second through hole 10 and the radius of the pin 2. In the illustrated example, the pin 2 comprises a handle 12 secured to one end of the pin. For example, the pin is made of metal or a metal alloy. Preferably the pin 2 is made of steel. The handle 12 facilitates insertion and removal of the pin 2.

The connecting device 1 comprises an eccentric ring 16 designed to fit in the first through hole 8. The eccentric ring 16 is arranged rotatable with respect to the first through hole 8. In one aspect, the periphery 17 of the eccentric ring 16 is circular, and the first through hole 8 is circular. This enables the eccentric ring 16 to be rotated with respect to the first through hole 8. The eccentric ring 16 has an opening 18 adapted to receive the shaft 4. The shaft 4 is rotatable with respect to splice element 6 about a rotational axis A when the shaft 4 is inserted in the opening 18 of the eccentric ring 16. In the illustrated example, the shaft 4 comprises a crank 13 secured to one end of the shaft. The crank facilitates rotation of the shaft 4. However, the shaft can also be rotated by a separate tool. Optionally, the connecting device 1 may comprise a locking mechanism for locking the shaft 4 in its position after the rotation.

The shaft 4 is elongated and the rotational axis is preferably aligned with the longitudinal axis of the shaft. The opening 18 has a shape corresponding to the cross-sectional shape of the shaft 4 to allow the shaft to be entered through the opening 18 and so that the axis 4 is fitted in the opening 18. The opening 18 in the eccentric ring 16 is designed so that the eccentric ring is prevented from rotating with respect to the shaft 4 upon rotation of the shaft when the shaft is inserted into the opening. The eccentric ring 16 and the shaft 4 are designed so that the eccentric ring 16 is rotating with respect to the splice element when the shaft 4 is rotated. For example, the shape of the opening in the eccentric ring is not rotationally symmetric to prevent the eccentric ring from rotating with respect to the shaft 4 when the shaft is inserted into the opening 18. For example, the opening 18 in the eccentric ring 16 and the shaft are designed so that the shaft is engaged to the eccentric ring when the shaft is inserted into the opening 18 in the eccentric ring and the shaft is rotating. Thus, the eccentric ring 16 is prevented from rotating with respect to the shaft 4 upon rotation of the shaft.

For example, the shaft and the eccentric ring are made of metal or a metal alloy. Preferably the shaft and the eccentric ring are made of steel.

In the illustrated example, the shaft 4 is substantially cylindrical, and the shaft 4 has one or more chamfers 20 arranged along the length of the shaft, and the opening 18 in the eccentric ring 16 is substantially circular and is provided with flat surfaces 21 corresponding to the chamfers 20 of the shaft 4 so that the shaft 4 is tightly fitted in the opening 18. In the illustrated example, the shaft has two chamfers 20 arranged on opposite sides of the shaft 4, and accordingly the eccentric ring 16 has two corresponding flat surfaces 21. The chamfers prevent the eccentric ring from rotating with respect to the shaft when the shaft is inserted into the opening. An advantage with this shape of the shaft is that it is easy to manufacture the shaft, as well as the opening in the eccentric ring.

Figure 2a shows an example of an eccentric ring 16 in a perspective view. Figure 2b shows the eccentric ring 16 from above. The eccentric ring 16 is arranged so that the centre C1 of the periphery 17 of the eccentric ring 16 is displaced from the centre C2 of the opening 18 in the eccentric ring 16, as shown in figure 2a. Due to the fact that the shaft 4 and the opening 18 have corresponding shapes, the rotational axis of the shaft 4 goes through the centre C2 of the opening when the shaft is inserted into the opening 18. Thus, here will be an offset between the rotational axis of the shaft 4 and the centre C1 of the eccentric ring. The size of the offset between the rotational axis of the shaft 4 and the centre C1 of the eccentric ring is equal to the distance O between the centre C2 of the opening and the centre C1 of the periphery 17 of the eccentric ring 16. R1 is the radius of the eccentric ring16 and R2 is the radius of the opening 18 in the eccentric ring.

Due to the fact that the centre C1 of the periphery of the eccentric ring 16 is displaced from the centre C2 of the opening 18 in the eccentric ring 16, the thickness of the eccentric ring 16 varies in a radial direction along the periphery of the eccentric ring, as seen from figure 2b. The eccentric ring 16 comprises a first portion 23 and a second portion 24, and the thickness in a radial direction of the first portion 23 is larger than the thickness of the second portion 24. The first and second portions 23, 24 are disposed on opposite sides of the eccentric ring 16 with respect to the centre C2 of the opening 18 in the eccentric ring 16.

Figures 3a - b show the splice element 6 with the pin 2 inserted in the second through hole 10, the eccentric ring 16 inserted in the first through hole 8, and the shaft 4 inserted in the opening 18 of the eccentric ring. In the illustrated example, the diameter of the second through hole 10 is larger than the diameter of the pin 2. A seen in figure 3a, there is a gap 14 between the pin 2 and the splice element 6 when the pin 2 has been inserted in the second through hole 10. The position of the pin 2 is fixed relative the beams since the pin 2 also passes through corresponding holes in the beams. Due to the gap 14, it is easy to insert the pin in the second through hole on site. Accordingly, there is no need to use any tool, such as a sledge or a hammer, to insert the pin into the second through hole. Suitably, the gap 14 between the pin 2 and the splice element 6 is between 0.5 and 3 mm, and preferably between 0.5 and 2 mm.

Figure 3a shows the connecting device 1 with the eccentric ring 16 in a first position where the first portion 23 of the eccentric ring is pointing towards the pin 2. Figure 3b shows the connecting device 1 with the eccentric ring 16 in a second position, rotated 180° with respect to the first position, so that the second portion 24 of the eccentric ring is pointing towards the pin 2. The eccentric ring 16 is rotated with respect to the first through hole 8 upon rotation of the shaft 4. In figure 3a, the eccentric ring is in a position where the first portion 23 of the eccentric ring is closer to the pin 2 than the second portion 24. By rotating the shaft 4 about 180°, the eccentric ring 16 is also rotated about 180° so that the second portion 24 of the eccentric ring is closer to the pin 2 than the first portion 23, as shown in figure 3b. Due to the fact that the centre C1 of the eccentric ring is offset from the rotational axis of the shaft 4, the splice element 6 is moved with respect to the pin 2 upon rotation of the shaft 4 and by that the gap 14 above the pin 2 is closed, as shown in figure 3b. The splice element 6 is pressed against the upper part of the pin 2. Thus, the pin 2 cannot move with respect to the shaft 4 and accordingly there is no play between beams. In the illustrated example, the first and second through holes 8, 10 are arranged spaced apart with their centre axes in parallel and the splice element 6 is moved along an axis perpendicular to the centre axes of the first and second through holes and extending between the first and second through holes.

For example, the offset O between the centre C1 of the eccentric ring 16 and the centre C2 of the opening 18 is at least half the size of the gap 14 between the pin and the splice element. Due to the eccentricity of the ring, the splice element 6 can be moved twice the length of the offset between the rotational axis of the shaft 4 and the centre C1 of the eccentric ring during rotation of the shaft. Thus, the offset should be at least half the size of the gap 14 in order to entirely close the gap. Preferably, the offset O between the centre C1 of the eccentric ring 16 and the centre C2 of the opening 18 is larger than half the size of the gap 14 between the pin and the splice element. By having an offset larger than half the size of the gap between the pin and the splice element, it is possible to achieve a pretension on the pin 2. A pretension on the pin ensures that there is no play between the pin and the splice element if there is an uneven pressure or pull on one side of the pin. Suitably, the offset between the rotational axis of the shaft and the centre of the eccentric ring is 10-20% larger than half the size of the gap 14 to provide a satisfactory pretension. For example, the offset O between the centre C1 of the eccentric ring 16 and the centre C2 of the opening 18 is between 0.3 and 5 mm.

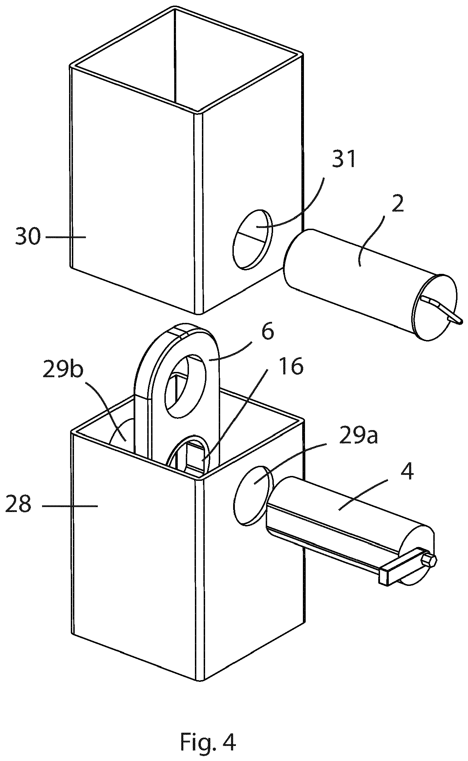

Figure 4 illustrates connection of first and second beams 28, 30 by means of the connecting device 1. In the illustrated example, the beams 28, 30 are hollow. However, the beams can have other shapes, such as a fork with two fingers. The first beam 28 is provided with two holes 29a-b for receiving the shaft 4. The second beam 30 is provided with two holes 31, in the same way as the first beam 28, for receiving the pin 2. The shaft 4 and eccentric ring 16 are preferably mounted on the first beam 28 beforehand, for example, at the factory, and thus the beams 28, 30 are connected to each other on site by the pin 2.

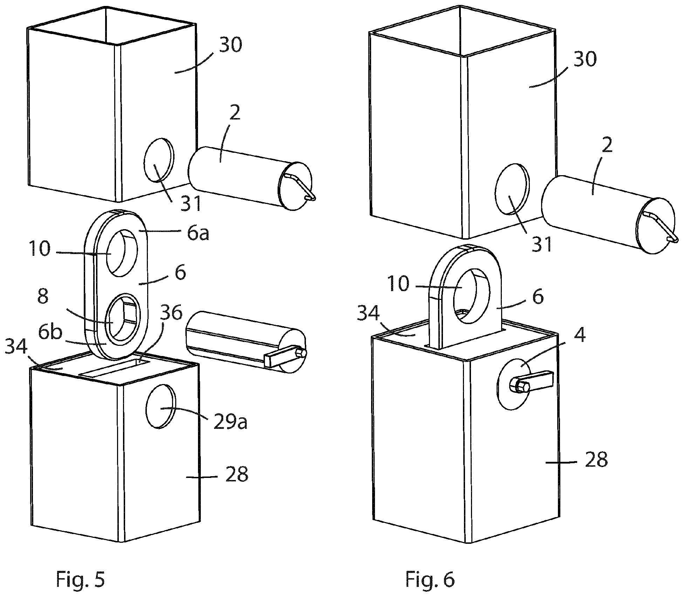

Figure 5 illustrates connection of the first and second beams 28, 30 by means of a connecting device 1 including a support part 34. In one embodiment, the connecting device 1 may comprise a support part 34 having a space 36 for receiving and supporting the lower part 6b of the splice element 6. The support part 34 is adapted to be attached to the first beam 28. The support part facilitates mounting of the splice element 6 on the first beam 28. In the illustrated example, the first beam 28 is hollow and has an opening in its upper end for receiving the support part 34, and the support part 34 is designed so that it fits in the hollow beam. The support part 34 facilitates mounting of the lower part 6b of splice element in the upper end of a hollow beam. The support part 34 is arranged so that the shaft 4 can extend through the support part from one end to the opposite end of the support part, and to extend through the first through hole 8 when the lower part 6b of the splice element is inserted in the space 36. For example, the support part 34 comprises one or two bores for receiving the shaft, and the bores are aligned with the first through hole 8 when the splice element 6 is received in the support part so that the shaft 4 passes through the first through hole 8 when the shaft 4 is inserted in the bore.

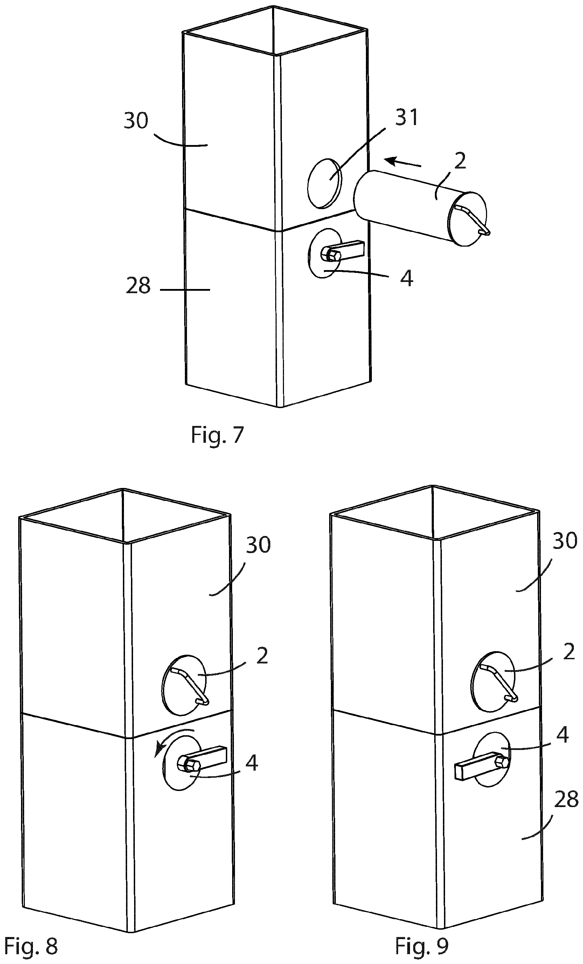

Figures 6 - 9 illustrate the use of the connecting device 1 for connecting a first and a second beam 28, 30 to each other end to end. A method for securing the first and a second beams 28, 30 to each other using the connecting device 1 will now be described with reference to figures 6 - 9. If the connecting device has a support part 34, the method comprises inserting the support part into an upper end of the first beam 28, and then inserting the lower part 6b of the splice element 6 into the space 36 in the support part. The method further comprises inserting the shaft 4 through the opening 18 of the eccentric ring 16 in the first through hole 8 of the splice element 6, and through the corresponding holes 29a-b in the first beam 28. This can preferably be done at the factory. In the next step, a lower end of the second beam 30 is moved into contact with the upper end of the first beam 28, and the upper part 6a including the second through hole 10 of the splice element is inserted into the second beam 30. Then, the pin 2 is inserted through the second through hole 10 of the splice element 6 and corresponding holes 31 in the second beam 30, as shown in figure 7 and 3a. Due to the difference in radius between the second through hole 10 and the pin 2, there is a gap 14 between the pin 2 and the splice element 6 when the pin 2 is inserted in the second through hole 10, as shown in figure 3a. I the last step, the shaft 4 is rotated about its longitudinal axis until the splice element 6 is pressed against the pin 2 and the gap 14 between the pin 2 and the splice element 6 is closed on one side of the second opening 10, as shown in figure 3b. In the example illustrated in figures 8 and 9, the shaft 4 is rotated about 180°. In this example, the connecting device is designed so that the gap 14 is closed when the shaft has been rotated 180°.

It is also possible to prestress the pin 2 towards the splice element 6 during rotation of the shaft 4 to ensure that there is no play between the pin and the splice element even if there is an uneven pressure or pull on one side of the pin. The connecting device 1 makes it fast and easy to connect two beams to each other on site. Typically, it takes about 30 second to connect two beams to each other by entering the pin 2 through the holes 31 in the second beam 30 and the second through hole 10 in the splice element 6, and to rotate the shaft 4 until the gap 14 is closed on one side of the pin. Optionally, the shaft 4 can be locked in its position after rotation of the shaft. However, this is not necessary.

It is also easy to disconnect the connection device and by that detach the beams from each other. The connection device is disconnected by performing the following steps:
- rotating the shaft 4 about its longitudinal axis in the opposite direction, for example 180°, until the at least one splice element 6 is released from the pin 2 and there is a gap 14 between the pin 2 and the splice element 6 all around the pin, and
- removing the pin 2 from the splice element 6 and the second beam (30).

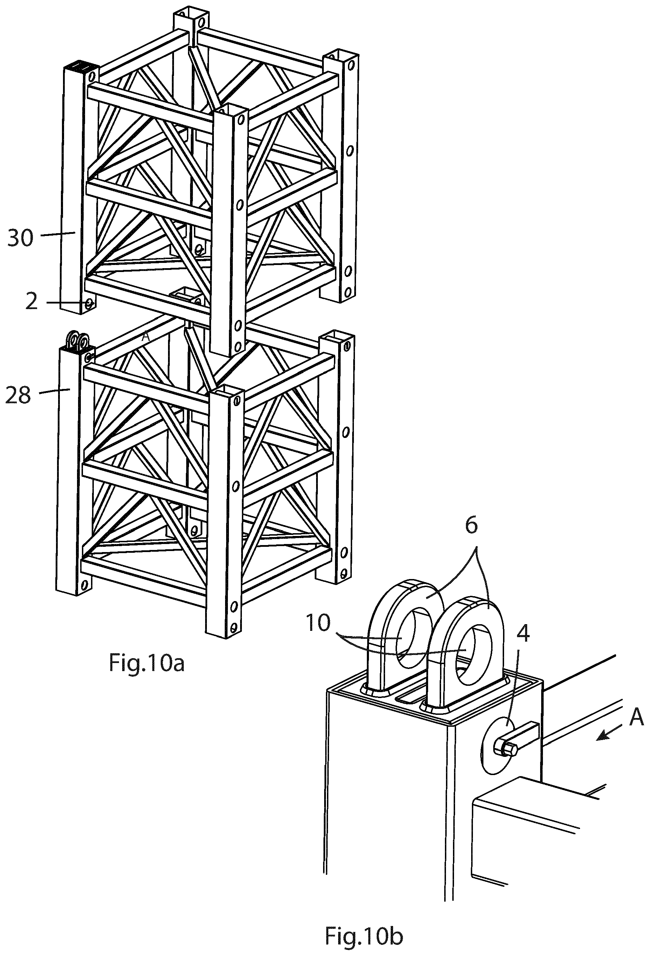

Figs. 10a-b show another example of a connecting device 1 including two splice elements 6. The second splice element 6 is designed in the same way as the first splice element 6, as shown in figure 1. Preferably, the shape of the first and the second splice elements 6 is identical. The second splice element 6 is provided with a first through hole 8 for receiving the shaft 4, and a second through hole 10 spaced apart from the first through hole 8 for receiving the pin 2. The first and second splice elements 6 are arranged in parallel and with the first through holes 8 aligned to allow the shaft 4 to extend through both first through holes 8, and with the second through holes 10 aligned to allow the shaft 4 to extend through both second through holes 10. Thus, there will be a gap between the pin 2 and the second splice element when the pin 2 is inserted in the second through hole 10 of the second splice element 6, in the same way as there is a gap between the pin 2 and the first splice element, as shown in figure 3a. The connecting device 1 comprises a second eccentric ring 16 arranged in the first through hole 8 of the second splice element 6 so that the second eccentric ring 16 is rotatable with respect to the first through hole 8 of the second splice element 6. The second eccentric ring is designed in the same way as the first eccentric ring 16, as shown in figures 2 a-b. Preferably, the shape of the first and second eccentric rings 16 is identical. The second eccentric ring 16 has an opening 18 for receiving the shaft 4, and the opening in the second eccentric ring is designed so that the second eccentric ring 16 is rotated upon rotation of the shaft 4 when the shaft is inserted into the second opening 18. The opening 18 of the second eccentric ring has the same shape as the opening 18 of the first eccentric ring. Thus, both the first and second splice elements 6 are moved with respect to the pin 2 upon rotation of the shaft 4, as shown in figure 3b. Having more than one splice element provided with eccentric rings makes the connecting device able to stand higher loads and to be more resistant to torque.

The connecting device is, for example, suitable for attaching a plurality of tower segments to each other to form an elongated tower, such as a tower crane or a wind tower. The tower segments are attached to each other by means of a plurality of connecting devices 1.

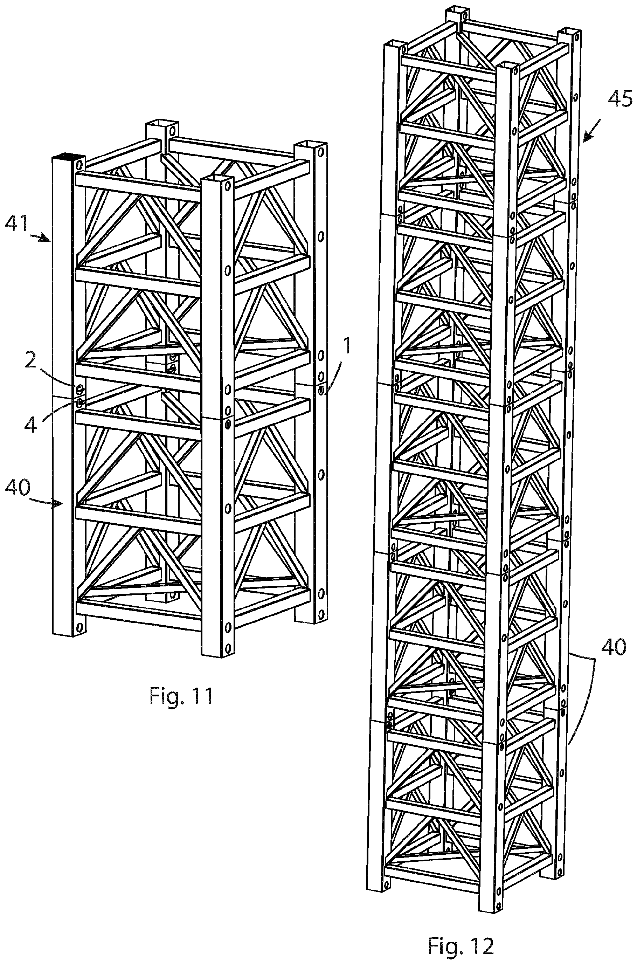

Figure 11 shows two tower segments 40, 41 attached to each other by means of a plurality of connecting devices 1. Each of the tower segments 40, 41 comprises four beams connected to four corresponding beams of a neighboring tower segment. The tower segments 40, 41 are connected to each other by means of four connecting devices 1.

Figure 12 shows an example of a tower 45 having a plural tower segments 40, 41 attached to each other by means of the connecting devices 1.

The present invention is not limited to the embodiments disclosed but may be varied and modified within the scope of the following claims. For example, the connecting device may include three or more splice elements.

### Reference numbers

1 connecting device
2 pin
4 shaft
6 splice element
6a upper part of the splice element
6b lower part of the splice element
8, first through hole
10, second through hole
12 handle
13 crank
14 gap
16 eccentric ring
17 periphery of the eccentric ring
18 opening of the eccentric ring
20 chamfers
21 flat surfaces on the eccentric ring
23 First portion of the eccentric ring
24 Second portion of the eccentric ring
A Rotational axis
C1 centre of the periphery of the eccentric ring
C2 centre of the opening in the eccentric ring
28 First beam
29a-b holes in the first beam
30 Second beam
31 holes in the second beam
34 support part
36 space in the support part
40, 41 tower segments
45 tower

## Claims

1. A connecting device (1) for securing two beams (28; 30) to each other end to end, wherein the connecting device comprises a pin (2), a shaft (4), and at least one splice element (6) provided with a first through hole (8) for receiving the shaft (4), and a second through hole (10) spaced apart from the first through hole (8) for receiving the pin (2), wherein there is a gap (14) between the pin (2) and the splice element (6) when the pin (2) is inserted in the second through hole (10), the shaft (4) is rotatable with respect to splice element (6) about a rotational axis (A) when the shaft is inserted in the first through hole (8), **characterized in that** the connecting device comprises an eccentric ring (16) arranged in the first through hole (8) so that the eccentric ring (16) is rotatable with respect to the first through hole (8), the eccentric ring (16) has an opening (18) for receiving the shaft (4), the opening (18) in the eccentric ring is designed so that the eccentric ring (16) is rotated upon rotation of the shaft (4) when the shaft is inserted into the opening, and the centre (C1) of the eccentric ring is offset (O) from the rotational axis (A) of the shaft so that the splice element (6) is moved with respect to the pin (2) upon rotation of the shaft (4) and by that closes the gap (14) on one side of the pin.

2. The connecting device according to claim 1, wherein the offset (O) between the rotational axis (A) and the centre (C1) of the eccentric ring (16) is at least half the size of the gap (14) between the pin (2) and the splice element (6).

3. The connecting device according to any of the previous claims, wherein the gap (14) between the pin (2) and the splice element (6) is between 0.5 and 3 mm, and preferably between 0.5 and 2 mm.

4. The connecting device according to any of the previous claims, wherein the offset (O) between the rotational axis (A) and the centre (C1) of the eccentric ring (16) is between 0.3 and 5 mm.

5. The connecting device according to any of the previous claims, wherein the periphery (17of the eccentric ring (16) is circular, and the first through hole (8) is circular.

6. The connecting device according to any of the previous claims, wherein the opening (18) in the eccentric ring (16) and the shaft (4) is designed so that the shaft (4) is engaged to the eccentric ring (16) when the shaft (4) is inserted into the opening (18) in the eccentric ring and the shaft (4) is rotating.

7. The connecting device according to any of the previous claims, wherein the shape of the opening (18) in the eccentric ring (16) is not rotationally symmetric, and the shaft (4) has a shape that corresponds to the shape of the opening (18) in the eccentric ring.

8. The connecting device according to any of the previous claims, wherein the shaft (4) is substantially cylindrical and has one or more chamfers (20) extending along the length of the shaft (4), and the shape of the opening (18) in the eccentric ring (16) has a corresponding shape.

9. The connecting device according to any of the previous claims, wherein the at least one splice element (6) is plate-shaped.

10. The connecting device according to any of the previous claims, wherein the at least one splice element (6) is made of high strength steel.

11. The connecting device according to any of the previous claims, wherein the splice element has an upper part (6a) provided with the second through hole (10) and a lower part (6b) provided with the first through hole (8), and the connecting device (1) comprises a support part (34) having a space (36) for receiving and supporting the lower part (6b) of the splice element (6).

12. The connecting device according to any of the previous claims, wherein the connecting device comprises a second splice element (6) provided with a first through hole (8) for receiving the shaft (4), and a second through hole (10) spaced apart from the first through hole (8) for receiving the pin (2), and there is a gap (14) between the pin (2) and the second splice element (6) when the pin (2) is inserted in the second through hole (10), the shaft (4) is rotatable with respect to the first and second splice elements (6) when the shaft (4) is inserted in the first through holes (8) of the splice elements, the connecting device comprises a second eccentric ring (16) arranged in the first through hole (8) of the second splice element so that the second eccentric ring (16) is rotatable with respect to the first through hole (8) of the second splice element, the second eccentric ring (16) has an opening (18) for receiving the shaft (4), the opening (18) in the second eccentric ring (16) is designed so that the second eccentric ring (16) is rotated upon rotation of the shaft (4) when the shaft is inserted into the opening (18), and the centre (C1) of the second eccentric ring (16) is offset from the rotational axis (A) of the shaft so that the second splice element (6) is moved with respect to the pin (2) upon rotation of the shaft (4).

13. Use of the connecting device according to any of the claims 1 - 12 for attaching a plurality of tower segments (40, 41) to each other to form a tower (45).

14. A tower comprising a plurality of tower segments (40, 41), wherein the tower segments are attached to each other by means of a plurality of connecting devices (1) according to any of the claims 1-12.

15. A method for securing first and a second beams (28, 30) to each other using the connecting device (1) according to any of the claims 1-12, wherein the method comprises:
- inserting the shaft (4) through the opening (18) of the eccentric ring (16) disposed in the first through hole (8) of the at least one splice element (6) and through one or more holes (29a-b) in the first beam (28),
- inserting the pin (2) through the second through hole (10) of the at least one splice element (6) and one or more holes (31) in the second beam (30), and
- rotating the shaft (4) about its longitudinal axis until the splice element (6) is pressed against the pin (2) and the gap (14) between the pin (2) and the splice element (6) is closed on one side of the pin.

## Patentansprüche

1. Verbindungsvorrichtung (1) zum durchgehenden Befestigen zweier Träger (28; 30) aneinander, wobei die Verbindungsvorrichtung einen Stift (2), eine Welle (4) und mindestens ein Spleißelement (6) umfasst, das mit einem ersten Durchgangsloch (8) zum Aufnehmen der Welle (4) und einem zweiten Durchgangsloch (10), das von dem ersten Durchgangsloch (8) beabstandet ist, zum Aufnehmen des Stifts (2) versehen ist, wobei
ein Spalt (14) zwischen dem Stift (2) und dem Spleißelement (6) vorhanden ist, wenn der Stift (2) in das zweite Durchgangsloch (10) eingeführt wird, die Welle (4) in Bezug auf das Spleißelement (6) um eine Drehachse (A) drehbar ist, wenn die Welle in das erste Durchgangsloch (8) eingeführt **wird,dadurch gekennzeichnet, dass** die Verbindungsvorrichtung einen Exzenterring (16) umfasst, der in dem ersten Durchgangsloch (8) so angeordnet ist, dass der Exzenterring (16) in Bezug auf das erste Durchgangsloch (8) drehbar ist, wobei der Exzenterring (16) eine Öffnung (18) zum Aufnehmen der Welle (4) aufweist, wobei die Öffnung (18) in dem Exzenterring so ausgebildet ist, dass der Exzenterring (16) bei Drehung der Welle (4) gedreht wird, wenn die Welle in die Öffnung eingeführt wird, und das Zentrum (C1) des Exzenterrings von der Drehachse (A) der Welle so versetzt (O) ist, dass das Spleißelement (6) bei Drehung der Welle (4) in Bezug auf den Stift (2) bewegt wird und dadurch den Spalt (14) auf einer Seite des Stifts schließt.

2. Verbindungsvorrichtung nach Anspruch 1, wobei der Versatz (O) zwischen der Drehachse (A) und dem Zentrum (C1) des Exzenterrings (16) mindestens halb so groß wie der Spalt (14) zwischen dem Stift (2) und dem Spleißelement (6) ist.

3. Verbindungsvorrichtung nach einem der vorstehenden Ansprüche, wobei der Spalt (14) zwischen dem Stift (2) und dem Spleißelement (6) zwischen 0,5 und 3 mm und vorzugsweise zwischen 0,5 und 2 mm beträgt.

4. Verbindungsvorrichtung nach einem der vorstehenden Ansprüche, wobei der Versatz (O) zwischen der Drehachse (A) und dem Zentrum (C1) des Exzenterrings (16) zwischen 0,3 und 5 mm beträgt.

5. Verbindungsvorrichtung nach einem der vorstehenden Ansprüche, wobei der Umfang (17des Exzenterrings (16) kreisförmig ist und das erste Durchgangsloch (8) kreisförmig ist.

6. Verbindungsvorrichtung nach einem der vorstehenden Ansprüche, wobei die Öffnung (18) in dem Exzenterring (16) und der Welle (4) so ausgebildet ist, dass die Welle (4) mit dem Exzenterring (16) in Eingriff steht, wenn die Welle (4) in die Öffnung (18) in dem Exzenterring eingeführt wird und die Welle (4) sich dreht.

7. Verbindungsvorrichtung nach einem der vorstehenden Ansprüche, wobei die Form der Öffnung (18) in dem Exzenterring (16) nicht drehsymmetrisch ist und die Welle (4) eine Form aufweist, die der Form der Öffnung (18) in dem Exzenterring entspricht.

8. Verbindungsvorrichtung nach einem der vorstehenden Ansprüche, wobei die Welle (4) im Wesentlichen zylindrisch ist und eine oder mehrere Abschrägungen (20) aufweist, die sich entlang der Länge der Welle (4) erstrecken, und die Form der Öffnung (18) in dem Exzenterring (16) eine entsprechende Form aufweist.

9. Verbindungsvorrichtung nach einem der vorstehenden Ansprüche, wobei das mindestens eine Spleißelement (6) plattenförmig ist.

10. Verbindungsvorrichtung nach einem der vorstehenden Ansprüche, wobei das mindestens eine Spleißelement (6) aus hochfestem Stahl hergestellt ist.

11. Verbindungsvorrichtung nach einem der vorstehenden Ansprüche, wobei das Spleißelement einen oberen Teil (6a), der mit dem zweiten Durchgangsloch (10) versehen ist, und einen unteren Teil (6b) aufweist, der mit dem ersten Durchgangsloch (8) versehen ist, und die Verbindungsvorrichtung (1) einen Stützteil (34) umfasst, der einen Raum (36) zum Aufnehmen und Stützen des unteren Teils (6b) des Spleißelements (6) aufweist.

12. Verbindungsvorrichtung nach einem der vorstehenden Ansprüche, wobei die Verbindungsvorrichtung ein zweites Spleißelement (6) umfasst, das mit einem ersten Durchgangsloch (8) zum Aufnehmen der Welle (4) und einem zweiten Durchgangsloch (10), das von dem ersten Durchgangsloch (8) beabstandet ist, zum Aufnehmen des Stifts (2) versehen ist, und wobei ein Spalt (14) zwischen dem Stift (2) und dem zweiten Spleißelement (6) vorhanden ist, wenn der Stift (2) in das zweite Durchgangsloch (10) eingeführt wird, wobei die Welle (4) in Bezug auf das erste und das zweite Spleißelement (6) drehbar ist, wenn die Welle (4) in die ersten Durchgangslöcher (8) der Spleißelemente eingeführt wird, wobei die Verbindungsvorrichtung einen zweiten Exzenterring (16) umfasst, der in dem ersten Durchgangsloch (8) des zweiten Spleißelements so angeordnet ist, dass der zweite Exzenterring (16) in Bezug auf das erste Durchgangsloch (8) des zweiten Spleißelements drehbar ist, wobei der zweite Exzenterring (16) eine Öffnung (18) zum Aufnehmen der Welle (4) aufweist, wobei die Öffnung (18) in dem zweiten Exzenterring (16) so ausgebildet ist, dass der zweite Exzenterring (16) bei Drehung der Welle (4) gedreht wird, wenn die Welle in die Öffnung (18) eingeführt wird, und das Zentrum (C1) des zweiten Exzenterrings (16) von der Drehachse (A) der Welle so versetzt ist, dass das zweite Spleißelement (6) bei Drehung der Welle (4) in Bezug auf den Stift (2) bewegt wird.

13. Verwendung der Verbindungsvorrichtung nach einem der Ansprüche 1 bis 12 zum Anbringen einer Vielzahl von Turmsegmenten (40, 41) aneinander, um einen Turm (45) zu bilden.

14. Turm, umfassend eine Vielzahl von Turmsegmenten (40, 41), wobei die Turmsegmente mittels einer Vielzahl von Verbindungsvorrichtungen (1) nach einem der Ansprüche 1 bis 12 aneinander angebracht sind.

15. Verfahren zum aneinander Befestigen eines ersten und eines zweiten Trägers (28, 30) unter Verwendung der Verbindungsvorrichtung (1) nach einem der Ansprüche 1 bis 12, wobei das Verfahren umfasst:
- Einführen der Welle (4) durch die Öffnung (18) des Exzenterrings (16), der in dem ersten Durchgangsloch (8) des mindestens einen Spleißelements (6) angeordnet ist, und durch ein oder mehrere Löcher (29a-b) in dem ersten Träger (28),
- Einführen des Stifts (2) durch das zweite Durchgangsloch (10) des mindestens einen Spleißelements (6) und ein oder mehrere Löcher (31) in dem zweiten Träger (30), und
- Drehen der Welle (4) um ihre Längsachse, bis das Spleißelement (6) gegen den Stift (2) gedrückt wird und der Spalt (14) zwischen dem Stift (2) und dem Spleißelement (6) auf einer Seite des Stifts geschlossen wird.

## Revendications

1. Dispositif de raccordement (1) pour la fixation de deux poutres (28 ; 30) l'une à l'autre extrémité à extrémité, dans lequel le dispositif de raccordement comprend une broche (2), un arbre (4) et au moins un élément de jonction (6) pourvu d'un premier trou traversant (8) pour la réception de l'arbre (4), et d'un second trou traversant (10) espacé du premier trou traversant (8) pour la réception de la broche (2), dans lequel
il y a un espace (14) entre la broche (2) et l'élément de jonction (6) lorsque la broche (2) est insérée dans le second trou traversant (10), l'arbre (4) peut tourner par rapport à l'élément de jonction (6) autour d'un axe de rotation (A) lorsque l'arbre est inséré dans le premier trou traversant (8), **caractérisé en ce que** le dispositif de raccordement comprend une bague excentrique (16) agencée dans le premier trou traversant (8) de sorte que la bague excentrique (16) peut tourner par rapport au premier trou traversant (8), la bague excentrique (16) a une ouverture (18) pour la réception de l'arbre (4), l'ouverture (18) dans la bague excentrique est conçue de sorte que la bague excentrique (16) est tournée lors de la rotation de l'arbre (4) lorsque l'arbre est inséré dans l'ouverture, et le centre (C1) de la bague excentrique est décalé (O) de l'axe de rotation (A) de l'arbre de sorte que l'élément de jonction (6) est déplacé par rapport à la broche (2 ) lors de la rotation de l'arbre (4) et de ce fait ferme l'espace (14) sur un côté de la broche.

2. Dispositif de raccordement selon la revendication 1, dans lequel le décalage (O) entre l'axe de rotation (A) et le centre (C1) de la bague excentrique (16) est au moins la moitié de la taille de l'espace (14) entre la broche (2) et l'élément de jonction (6).

3. Dispositif de raccordement selon l'une quelconque des revendications précédentes, dans lequel l'espace (14) entre la broche (2) et l'élément de jonction (6) est compris entre 0,5 et 3 mm, et de préférence entre 0,5 et 2 mm.

4. Dispositif de raccordement selon l'une quelconque des revendications précédentes, dans lequel le décalage (O) entre l'axe de rotation (A) et le centre (C1) de la bague excentrique (16) est compris entre 0,3 et 5 mm.

5. Dispositif de raccordement selon l'une quelconque des revendications précédentes, dans lequel la périphérie (17de la bague excentrique (16) est circulaire, et le premier trou traversant (8) est circulaire.

6. Dispositif de raccordement selon l'une quelconque des revendications précédentes, dans lequel l'ouverture (18) dans la bague excentrique (16) et l'arbre (4) est conçu de sorte que l'arbre (4) est engagé à la bague excentrique (16) lorsque l'arbre (4) est inséré dans l'ouverture (18) dans la bague excentrique et que l'arbre (4) tourne.

7. Dispositif de raccordement selon l'une quelconque des revendications précédentes, dans lequel la forme de l'ouverture (18) dans la bague excentrique (16) n'est pas symétrique en rotation, et l'arbre (4) a une forme qui correspond à la forme de l'ouverture (18) dans la bague excentrique.

8. Dispositif de raccordement selon l'une quelconque des revendications précédentes, dans lequel l'arbre (4) est sensiblement cylindrique et a un ou plusieurs chanfreins (20) s'étendant le long de la longueur de l'arbre (4), et la forme de l'ouverture (18) dans la bague excentrique (16) a une forme correspondante.

9. Dispositif de raccordement selon l'une quelconque des revendications précédentes, dans lequel l'au moins un élément de jonction (6) est en forme de plaque.

10. Dispositif de raccordement selon l'une quelconque des revendications précédentes, dans lequel l'au moins un élément de jonction (6) est constitué d'acier à haute résistance.

11. Dispositif de raccordement selon l'une quelconque des revendications précédentes, dans lequel l'élément de jonction a une partie supérieure (6a) pourvue du second trou traversant (10) et une partie inférieure (6b) pourvue du premier trou traversant (8), et le dispositif de raccordement (1) comprend une partie de support (34) ayant un espace (36) pour la réception et le support de la partie inférieure (6b) de l'élément de jonction (6).

12. Dispositif de raccordement selon l'une quelconque des revendications précédentes, dans lequel le dispositif de raccordement comprend un second élément de jonction (6) pourvu d'un premier trou traversant (8) pour la réception de l'arbre (4), et un second trou traversant (10) espacé du premier trou traversant (8) pour la réception de la broche (2), et il y a un espace (14) entre la broche (2) et le second élément de jonction (6) lorsque la broche (2) est insérée dans le second trou traversant (10), l'arbre (4) peut tourner par rapport aux premier et second éléments de jonction (6) lorsque l'arbre (4) est inséré dans les premiers trous traversants (8) des éléments de jonction, le dispositif de raccordement comprend un second anneau excentrique (16) agencé dans le premier trou traversant (8) du second élément de jonction de sorte que le second anneau excentrique (16) peut tourner par rapport au premier trou traversant (8) du second élément de jonction, la seconde bague excentrique (16) a une ouverture (18) pour la réception de l'arbre (4), l'ouverture (18) dans la seconde bague excentrique (16) est conçue de sorte que la seconde bague excentrique (16) est tournée lors de la rotation de l'arbre (4) lorsque l'arbre est inséré dans l'ouverture (18), et le centre (C1) de la seconde bague excentrique (16) est décalé de l'axe de rotation (A) de l'arbre de sorte que le second élément de jonction ( 6) est déplacé par rapport à la broche (2) lors de la rotation de l'arbre (4).

13. Utilisation du dispositif de raccordement selon l'une quelconque des revendications 1 à 12 pour l'attache d'une pluralité de segments de tour (40, 41) l'un à l'autre pour former une tour (45).

14. Tour comprenant une pluralité de segments de tour (40, 41), dans lequel les segments de tour sont attachés l'un à l'autre au moyen d'une pluralité de dispositifs de raccordement (1) selon l'une quelconque des revendications 1 à 12.

15. Procédé pour la fixation de première et seconde poutres (28, 30) l'une à l'autre à l'aide du dispositif de raccordement (1) selon l'une quelconque des revendications 1 à 12, dans lequel le procédé comprend :
- l'insertion de l'arbre (4) à travers l'ouverture (18) de la bague excentrique (16) disposée dans le premier trou traversant (8) de l'au moins un élément de jonction (6) et à travers un ou plusieurs trous (29a-b) dans la première poutre (28),
- l'insertion de la broche (2) à travers le second trou traversant (10) de l'au moins un élément de jonction (6) et un ou plusieurs trous (31) dans la seconde poutre (30), et
- la rotation de l'arbre (4) autour de son axe longitudinal jusqu'à ce que l'élément de jonction (6) soit pressé contre la broche (2) et l'espace (14) entre la broche (2) et l'élément de jonction (6) soit fermé sur un côté de la broche.
